# EUROPEAN PATENT APPLICATION

(11) **EP 4 578 362 A1**
(43) Date of publication of application: **02.07.2025**
(21) Application number: 23872897.6
(22) Date of filing: 15.09.2023
(51) Int. Cl.: A47L 15/00, G06Q 10/02, G07C 11/00

(54) **CUP WASHER CONTROL METHOD**

(30) Priority: 26.09.2022 KR 20220121431; 09.06.2023 KR 20230074416
(71) Applicant: LG Electronics Inc., Yeongdeungpo-gu Seoul 07336 (KR)
(72) Inventor: KIM, Miseong, Seoul 08592 (KR); OH, Sejae, Seoul 08592 (KR); JIN, Jaewoo, Seoul 08592 (KR); JUNG, Taeyong, Seoul 08592 (KR)
(74) Representative: Vossius & Partner Patentanwälte Rechtsanwälte mbB
(86) International application number: PCT/KR2023/013969
(87) International publication number: WO 2024/071779

(57) **Abstract**

A cup washer control method is disclosed. The cup washer control method operates in a management mode for checking whether a cup washer is operating normally and a use mode for washing cups, wherein the use mode may include a preparation mode in which the temperature of water stored in a water tank of the cup washer is lower than a set temperature, a standby mode in which the temperature of the water stored in the water tank is higher than or equal to the set temperature, and a wash mode for washing cups accommodated in the cup washer.

## Description

### [Technical Field]

The present invention relates to a cup washer control method, and more specifically, to a method of controlling a cup washer for washing a cup carried by a user.

### [Background Art]

The matters described in this section merely provide background information on the present invention and do not constitute prior art.

Recently, in order to prevent environmental pollution, stores selling beverages are reducing the number of disposable cups provided to customers, and there is an increasing trend that when customers visit the stores, they carry their own reusable cups such as tumblers, and put beverage in their reusable cups.

In order to provide convenience to customers, that is, those who carry and use their own reusable cups, it is necessary to place a cup washer for washing reusable cups carried by users in the store, so that users can conveniently wash their reusable cups carried by them.

Related prior art is disclosed in Korean Patent Application Publication No. 10-2020-0016470.

Users only wash cups using the cup washer and do not manage or repair the cup washer, and there is a separate manager for this. Therefore, it is desirable to enable users to simply use the cup washer conveniently without, if possible, needing to operate it by directly touching it.

In order to reduce the frequency with which users directly touch and operate the cup washer and to use the cup washer conveniently, it is necessary to develop a technology that can control the operation of the cup washer through an application implemented on a mobile device such as a smart phone carried by the user.

In addition, in order to use the cup washer for a long period of time without any breakdown, it is necessary for a manager to perform maintenance on it. Therefore, there is a need to develop a cup washer control algorithm that can make smooth the management by a manager and the use by users.

Additionally, there is a need to develop a method of controlling a cup washer to enable a user to choose between quickly washing a cup and clearly washing a cup over a more or less long period of time.

However, these technologies are not disclosed in the above-mentioned prior art.

### [Disclosure]

### [Technical Problem]

A purpose of the present invention is to provide a cup washer control method having a configuration that can be controlled by a user using a mobile device carried by the user.

It is also a purpose of the present invention to provide a cup washer control method having an algorithm that integrates the management by a manager and the use by users.

It is also an object of the present invention to provide a cup washer control method that enables the cup washer to operate in a quick washing mode or a normal washing mode according to a user's selection.

The objects of the present invention are not limited to the ones described above, and other objects and advantages of the present invention which are not mentioned can be understood from the following description, and will be more clearly understood from the embodiments of the present invention. Furthermore, it will be readily appreciated that the objects and advantages of the present invention can be realized by the means presented in the claims, and combinations thereof.

### [Technical Solution]

The control of the cup washer according to an embodiment can be proceeded with by entering a command to a controller provided in a cup washer.

The entering of a command to the controller can be proceeded with via an application programmed and implemented on a smart device such as a smart phone carried by a user who wants to wash a cup, or via an input part provided in the cup washer. The entering of a command can be proceeded with by a user or by a manager who maintains and repairs the cup washer.

The smart device can be connected communicatively with a main server located remotely, and the controller of the cup washer may also be connected communicatively with the main server. Therefore, commands entered into the smart device can be transmitted to the controller of the cup washer via the main server.

In a cup washer control method, a cup washer can operate in a management mode during which it is checked whether the cup washer operates normally, and a use mode during which a cup is washed using the cup washer.

Therefore, the cup washer control method can include an algorithm that integrates the management mode during which the cup washer is maintained or repaired and the use mode during which the user uses the cup washer for the washing.

The cup washer can perform the normal washing or the quick washing according to the user's selection. The cup washer can be changed from the preparation mode or the standby mode to the sleep mode when receiving a command from the input part, or when a set period of time has elapsed from the beginning of the preparation mode or the standby mode.

In a cup washer control method operating in a management mode during which it is checked whether a cup washer operates normally, and a use mode during which a cup is washed, the use mode may include a preparation mode corresponding to a case where a water stored in a water tank of the cup washer has a temperature lower than a set temperature, a standby mode corresponding to a case where the water stored in the water tank has a temperature equal to or higher than a set temperature, and a washing mode during which a cup accommodated in the cup washer is washed.

The use mode may include a sleep mode during which the operation of a heater accommodated in the water tank is stopped, and the sleep mode may be changed to either the preparation mode or the standby mode by receiving a command.

The cup washer may be changed from the sleep mode to one of the preparation mode and the standby mode depending on a command enterred from a mobile device carried by a user or an input part provided in the cup washer.

The cup washer may be changed from the preparation mode or the standby mode to the sleep mode when receiving a command from the input part while in the preparation mode or the standby mode, or when a set period of time has elapsed from the beginning of the preparation mode or the standby mode.

The cup washer may be changed from one of the sleep mode and the standby mode to the washing mode by receiving a command from the mobile device.

The cup washer may proceed with a quick washing mode during which a cup is washed using a room temperature water according to an entered command, or a normal washing mode during which a cup is washed using a hot water supplied from the water tank.

The cup washer may proceed with a washing immediately when the cup washer receives a quick washing mode progress.

When the cup washer receives a normal washing mode progress, if the cup washer is currently in the standby mode, the cup washer may immediately proceed with a washing of a cup, while, if the cup washer is currently in the preparation mode, the cup washer may proceed with a washing of a cup after the water stored in the water tank reaches the set temperature.

The cup washer may receive a reservation for a washing of a cup from a user during the use mode, and list a plurality of reservations entered by a plurality of users in an order in which the plurality of reservations were entered, and transmit a notification signal to each user who has made a reservation for a washing when a washing turn for each of a plurality of reservations arrives.

In the case where the cup washer receives a reservation from a user during the sleep mode, the cup washer may be changed from the sleep mode to one of the preparation mode and the standby mode depending on the temperature of the water stored in the water tank.

The cup washer may be provided to maintain the sleep mode without receiving a reservation for a washing of a cup from a user during a set time period.

The door for opening and closing the washing part provided in the cup washer may be provided to be locked with the washing part being closed during the washing mode.

The management mode may include an initial mode during which, after the cup washer is turned on, a water which has been introduced into a washing part provided in the cup washer is drained to an outside, and a main server and the cup washer are connected communicatively with each other, and an installation mode during which a computer program is installed or updated, which controls an operation of the cup washer.

During the management mode, the cup washer may proceed with an operation of draining a water stored in the water tank to an outside.

In the case where there is a command input regarding a draining, the cup washer may be changed to the use mode after a draining operation and a proceeding of the installation mode have been completed, while, in the case where there is no command input regarding a draining, the cup washer may be changed to the use mode after a proceeding of the installation mode has been completed.

The door may be provided to be unlocked when a set period of time has elapsed after the washing mode has been completed, or upon receiving a command to stop a proceeding of the washing mode.

After the washing mode has been completed or a command to stop the washing mode has been received, the cup washer may drain a water that has been introduced into a washing part to an outside, and after the draining has been completed, the cup washer may be changed to the preparation mode.

### [Advantageous Effects]

In a cup washer control method according to the present invention, a user can remotely control the cup washer by a mobile device carried by the user, thereby reducing the number of times the user has to wait in line in front of the cup washer for the user's turn or to enter control commands directly into the cup washer, which thus provides convenience to the user of the cup washer.

Additionally, the cup washer control method according to the present invention can include an algorithm that integrates the management mode during which the cup washer is maintained or repaired and the use mode during which the user uses the cup washer for the washing. Therefore, it is possible to provide convenient use for users while ensuring smooth management of the cup washer.

Additionally, in the cup washer control method according to the present invention, the cup washer can perform the normal washing or the quick washing according to the user's selection. By the simple entering on the mobile device by the user, the controller can divide the normal washing mode and the quick washing mode to perform the washing of the cup, thereby providing convenience to the user.

In addition to the effects described above, specific effects of the present invention will be described below together with specific details for practicing the invention.

### [Description of Drawings]

FIG. 1 is a perspective view showing a cup washer according to an embodiment.
FIG. 2 is a view of FIG. 1 when viewed from a different direction.
FIG. 3 is a view showing a state in which a door is opened in a cup washer according to an embodiment.
FIG. 4 is a perspective view showing a cup washer with some components removed.
FIG. 5 is a side view of FIG. 4.
FIG. 6 is a perspective view showing the washing part according to an embodiment.
FIG. 7 is a front view showing the washing part according to an embodiment.
FIG. 8 is a side view showing the washing part according to an embodiment.
FIG. 9 is a rear view showing the washing part according to an embodiment.
FIG. 10 is a flowchart for explaining a cup washer control method according to an embodiment.
FIG. 11 is a flowchart specifically showing a cup washer control method according to an embodiment.
FIG. 12 is a table for explaining a cup washer control method according to an embodiment.

### [Best Mode]

The purposes, features and advantages described above will be described in detail below with reference to the accompanying drawings, so that a person having ordinary knowledge in the technical field to which the present invention pertains can easily practice the technical idea of the present invention. In describing the present invention, if it is determined that a detailed description of a known technology related to the present invention may unnecessarily obscure the gist of the present invention, the detailed description thereof will be omitted. Hereinafter, preferred embodiments of the present invention will be described in detail with reference to the accompanying drawings. In the drawings, like reference numerals are used to refer to like or similar components.

Although the terms "first", "second", and so on are used to describe various components, these components are not limited by these terms. These terms are merely used to distinguish one component from another component, and unless specifically stated to the contrary, it should be understood that a first component may also be a second component.

Throughout the specification, unless specifically stated to the contrary, each component may be singular or plural.

As used herein, singular expressions include plural expressions, unless the context clearly dictates otherwise. In this application, the terms "be comprised of" or "comprising" should not be construed to necessarily include all of the various components or various steps described in the specification, but should be construed to mean that some of the components or some of the steps may not be included, or that additional components or steps may be included.

Throughout the specification, "A and/or B" means A, B, or A and B, unless otherwise specified, and "C to D" means equal to or greater than C and equal to or smaller than D unless otherwise specified.

Throughout the specification, the term "up and down direction" refers to the up and down direction of the cup washer when installed for normal use. The term "left and right direction" refers to a direction perpendicular to the up and down direction, and the term "front and rear direction" refers to a direction orthogonal to both the up and down direction and the left and right direction. The term "opposite-side direction" or "lateral direction" has a meaning including the left and right direction and the front and back direction.

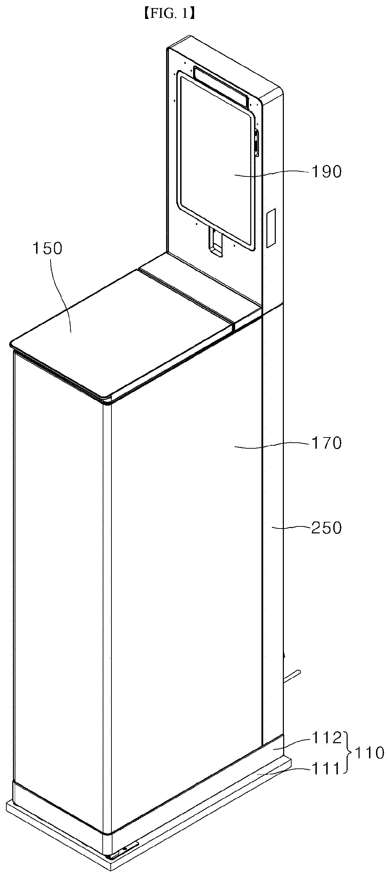

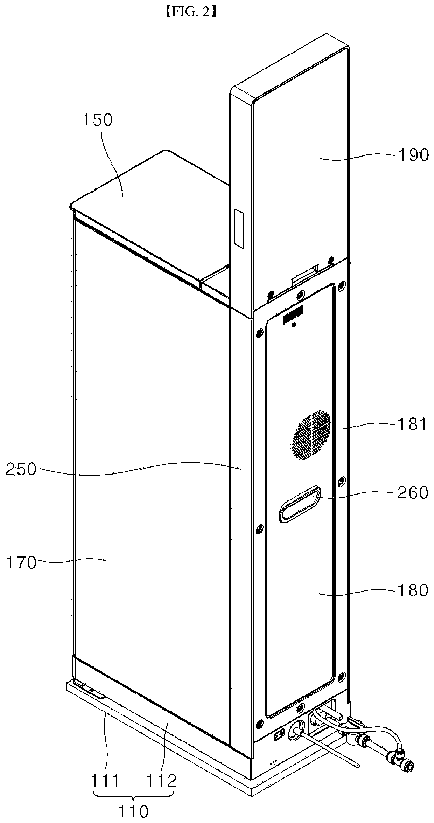

FIG. 1 is a perspective view showing a cup washer according to an embodiment. FIG. 2 is a view of FIG. 1 when viewed from a different direction.

A cup washer according to an embodiment may be installed in a store that serves beverages, for example. Users of the cup washer may be customers who purchase and drink beverages. To protect the environment, the provision of disposable cups to customers in service stores has recently been restricted, and the scope of these restrictions is gradually expanding.

Accordingly, the cup washer may be installed in a service store so that users carrying reusable cups can wash and use the cups at the service store. These reusable cups such as tumblers carried by users may become objects to be washed. Therefore, the cup washer can have a structure that is convenient for the user to use.

At the upper side of the cup washer there may be provided a washing part 130 which accommodates therein and washes a cup. The washing part 130 may be opened and closed by a door 150. At this time, the door 150 may open and close the washing part 130 by being hinge-rotated in an up and down direction of the cup washer.

Due to such structure, the user can conveniently wash the cup by opening the door 150 with his/her hand, placing the cup in the washing part 130, closing the door 150 back, and then operating the cup washer without bending his/her waist.

In order for the user to use the cup washer without bending the waist, the height of the washing part 130 in the cup washer needs to be appropriately adjusted to fit the body of an adult. Additionally, in order to increase space efficiency, the cup washer needs to be provided to have a relatively small volume.

To this end, the cup washer may have a tower-like shape with a relatively small planar cross-sectional area and a relatively great length in an up and down direction. Due to its tower-like shape, relatively bulky components of the cup washer need to be disposed in an up and down direction.

In addition, the cup washer may have a risk of toppling over because of the tower-like shape, and thus, it is necessary to lower the overall center of gravity by placing components with relatively greater weights at the lower side in order to prevent the cup washer from toppling over.

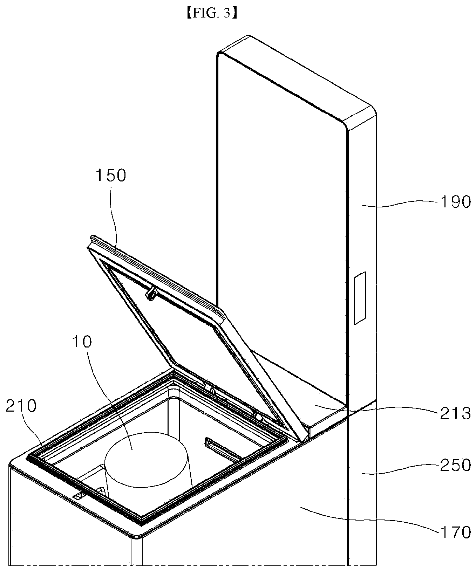

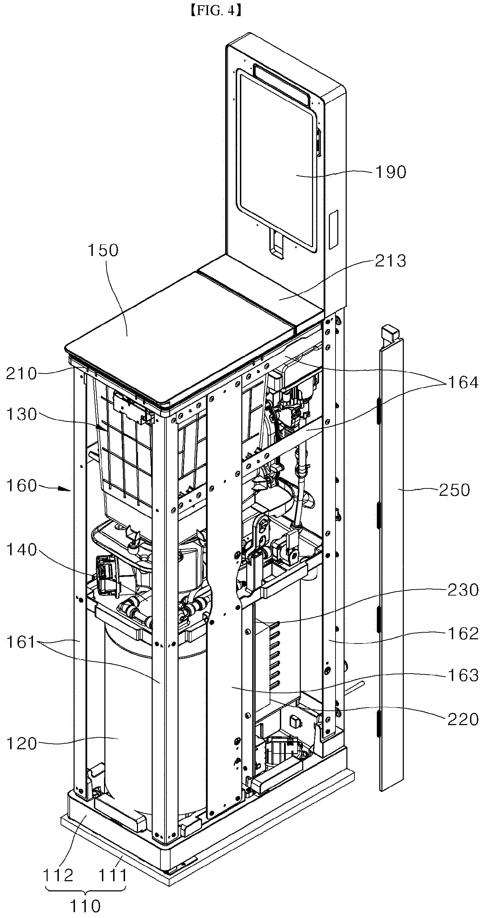

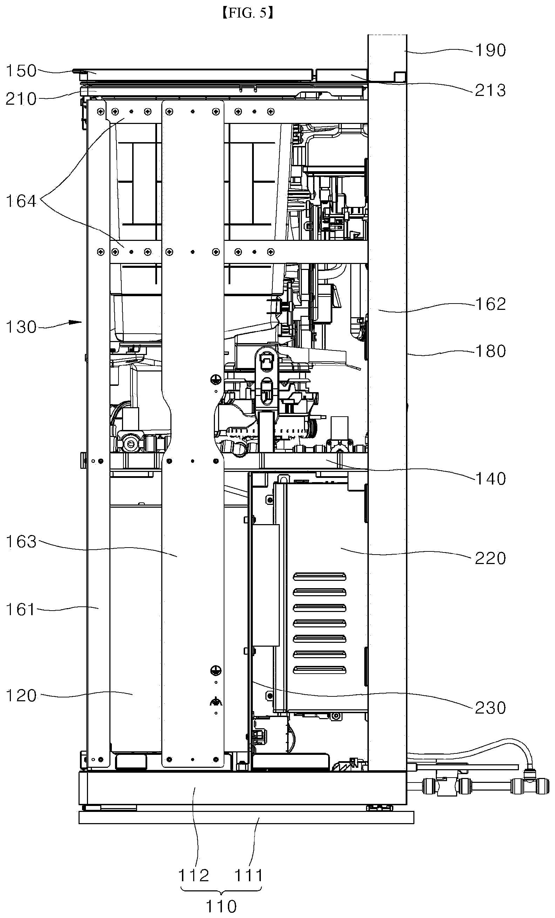

Hereinafter, the structure of the cup washer will be described in more detail with reference to the drawings. FIG. 3 is a view showing a state in which a door 150 is opened in a cup washer according to an embodiment. FIG. 4 is a perspective view showing a cup washer with some components removed. FIG. 5 is a side view of FIG. 4.

The cup washer according to an embodiment may include a base plate 110, a water tank 120, a washing part 130, an intermediate plate 140, a door 150, and a frame 160.

The base plate 110 may be disposed at the lowermost side of the cup washer and may support other components of the cup washer. The lower part of the base plate 110 may be placed on the ground. The base plate 110 may include a first part 111 and a second part 112. The first part 111 may be placed on the ground at its lower surface, and may support the second part 112.

On the upper side of the first part 111 there may be placed the second part 112 on which the water tank 120 may be placed. To the second part 112 a frame 160 may be coupled. For example, to the second part 112 a front supporter 161, a rear supporter 162, and an intermediate supporter 163 may be coupled. As a result, the frame 160 may be supported by the second part 112.

The water tank 120 may be placed on the upper side of the base plate 110, and store water for washing a cup. The water tank 120 may be connected to the city water supply via a tubing. Accordingly, water from the city water can flow into the water tank 120 and be stored therein. Additionally, the water tank 120 may be connected to the washing part 130 via a tubing. Accordingly, water from the water tank 120 can be introduced into the washing part 130, and be used to wash a cup accommodated in the washing part 130.

In the water tank 120 there may be provided a heating device. The heating device may be provided as, for example, an electric resistance heating device. The water in the water tank 120 may be heated by the heating device and introduced into the washing part 130. Accordingly, the cleaning efficiency for the cup can be improved because the cup is washed using the heated hot water.

The water tank 120 may be filled with water. Therefore, the water tank 120 filled with water can have a relatively greater weight compared to other components. The water tank 120 may be placed on the base plate 110 to be disposed at the lower side of the cup washer.

The height of the overall center of gravity of the cup washer can be lowered because of the weight of the water tank 120 filled with water and disposed at the lower side of the cup washer. Accordingly, the cup washer provided in a tower-like shape with a relatively great length in an up and down direction can maintain a stable state without easily toppling over even under an external impact.

The washing part 130 may be disposed on the upper side of the water tank 120, and wash the cup accommodated therein. In the washing part 130 there may be formed a space for accommodating a cup. The washing part 130 may be connected to the water tank 120 via a tubing. Therefore, water for washing can be introduced from the water tank 120 into the washing part 130.

In another embodiment, the washing part 130 may be directly connected with the city water without passing through the water tank 120. Accordingly, the cup can be washed using water introduced from the water tank 120 or using water introduced directly from the city water, depending on the user's choice.

The intermediate plate 140 may be disposed between the water tank 120 and the washing part 130, and support the washing part 130. On the intermediate plate 140 the washing part 130 may be disposed, and the intermediate plate 140 may support a portion of the weight of the washing part 130. The intermediate plate 140 may have a generally plate-like shape, and be coupled to the frame 160 at the edges to be supported by the frame 160.

The door 150 may be disposed on the upper side of the washing part 130, and open and close the open top of the washing part 130 by being hinge-rotated in an up and down direction. Referring to FIG. 3, the door 150 may be hinge-rotated in the up and down direction of the cup washer. Therefore, the user can manually open the door 150, put a cup 10 inside the washing part 130, close the door 150 back, and then cause the washing process to be performed on the cup 10.

At the upper end of the washing part 130 a top cover 210 may be provided. A portion of the top cover 210 may be coupled to the upper perimeter region of the washing part 130, and the door 150 may be placed on top of it.

At another portion of the top cover 210 a feeding entrance cover 213 may be provided. The feeding entrance cover 213 may open and close the inlets for detergent and rinse introduced into the washing part 130, and be provided so as to be detachable from the top cover 210.

The user may open and close the door 150 at the upper end of the cup washer to put a cup in the washing part 130 or take a cup out of the washing part 130. At this time, since the door 150 is hinge-rotated in an up and down direction, the user can conveniently move the door 150 without having to bend his/her waist.

In addition, since the door 150 is hinge-rotated, the cup washer can be provided such that the area it occupies when viewed in a plan view remains unchanged even when the door 150 is opened. Accordingly, the planar cross-sectional area of the cup washer is constant regardless of whether the door 150 is opened or closed, so that no additional space is required to open the door 150.

In the embodiment, the cup is provided so as to be hinge-rotated in an up and down direction at the upper end of the washing part 130, so that the user can conveniently use the cup washer by opening and closing the door 150 without bending the waist. In addition, this structure eliminates the need for additional space to open the door 150, thereby increasing space efficiency.

The frame 160 may be supported by the base plate 110, be coupled with the intermediate plate 140, and support the washing part 130. The frame 160 may prepare an internal space in the cup washer, and various components may be coupled to it, and it may support these components.

The frame 160 may include the front supporter 161, the rear supporter 162, the intermediate supporter 163, and the upper supporter 164. Each component of the frame 160 may support the weights of the washing part 130, the door 150, and the like provided on the upper side of the cup washer.

The front supporters 161 may be disposed as a pair spaced apart from each other at the front of the cup washer, with their lower portions connected to the base plate 110, and with their longitudinal directions disposed in an up-down direction. The pair of front supporters 161 may be disposed at positions spaced apart from each other in the lateral direction of the cup washer at the front of the cup washer, and form front corner regions of the cup washer.

The front supporter 161 may be formed to have an L-shaped cross-section in order to form the corner region of the cup washer. The front supporter 161 may be coupled to the base plate 110 by a coupling mechanism such as a screw.

The rear supporters 162 may be disposed as a pair spaced apart from each other at the rear of the cup washer, with their lower portions connected to the base plate 110, and with their longitudinal directions disposed in an up-down direction. The pair of rear supporters 162 may be disposed at positions spaced apart from each other in the lateral direction of the cup washer at the rear of the cup washer, and be disposed adjacent to rear corner regions of the cup washer. The rear supporter 162 may be coupled to the base plate 110 by a coupling mechanism.

The intermediate supporters 163 may be disposed as a pair spaced apart from each other between the front supporters 161 and the rear supporters 162, with their lower portions connected to the base plate 110, and with their longitudinal directions disposed in an up-down direction. The pair of intermediate supporters 163 may be disposed at positions spaced apart from each other in the lateral direction of the cup washer in the central region of the cup washer.

The intermediate supporter 163 may be coupled to the base plate 110 by a coupling mechanism. In addition, the intermediate supporter 163 may be coupled to the intermediate plate 140 and the upper supporter 164 by coupling mechanisms to stably maintain its own position and support the weights of the cup washer components.

The upper supporters 164 may be disposed as a pair spaced apart from each other in the lateral direction at the upper side of the intermediate supporter 163, with their longitudinal directions disposed in a front and rear direction, and be coupled with the washing part 130. The pair of upper supporters 164 may be disposed at positions spaced apart from each other in the lateral direction of the cup washer at the upper side of the cup washer.

The washing part 130 may be coupled to the upper supporter 164 by a coupling mechanism. Therefore, the upper supporter 164 can support the weight of the washing part 130.

The upper supporter 164 may be provided in a plural number so that they are spaced apart from each other in the up and down direction of the cup washer. Thus, in FIG. 5 and the like, an embodiment is illustrated in which each pair is provided on each of the opposite sides of the cup washer in an up and down direction of the cup washer, making a total of four. However, the number of upper supporters 164 is not limited to this.

Each upper supporter 164 may be coupled to the front supporter 161, the rear supporter 162, and the intermediate supporter 163. Accordingly, the weight of the washing part 130 can be transferred to the front supporter 161, the rear supporter 162, and the intermediate supporter 163 through the upper supporter 164, and finally to the base plate 110.

With this structure, the cup washer can stably support the washing part 130 provided therein. The upper supporter 164 may be coupled to the front supporter 161, the rear supporter 162, and the intermediate supporter 163 by a coupling mechanism such as a screw.

In the embodiment, the components provided in the upper side of the cup washer, including the washing part 130, may be supported by the frame 160, and each component may be finally supported by the base plate 110. Due to this structure, each component can be stably supported by the frame 160 and base plate 110, even with relatively heavy components such as the washing part 130 provided in the upper side of the cup washer.

The cup washer may include a front panel 170 and a rear panel 180. The front panel 170 may be disposed at the front of the cup washer to cover the water tank 120 and the washing part 130. The front panel 170 may be coupled to the rear supporter 162 of the frame 160 by a coupling mechanism.

The rear panel 180 may be coupled with the frame 160 to cover the rear of the cup washer. The rear panel 180 may be provided with a first ventilation hole 181 to allow ventilation between the inside and outside of the cup washer. Air introduced into a drying module 132 to be described below may be introduced to the inside of the cup washer through the first ventilation hole 181.

On the rear panel 180 a handle 260 that allows a user or manager to hold the cup washer for easy movement of the cup washer may be coupled.

The cup washer may include a display part 190 coupled to the upper side of the rear supporter 162 and disposed at one side of the door 150. The display part 190 may be disposed at one side of the door 150 to protrude from the door 150.

Therefore, the user can view the display part 190 from the front of the cup washer. The display part 190 may display various information about the use of the cup washer in the form of images, text, and videos.

While viewing the information displayed on the display part 190, the user may operate the cup washer or become aware of the operating status of the cup washer. Additionally, the display part 190 may be provided with, for example, a capacitive touch-type command input means. Therefore, the user can control the operation of the cup washer using the display part 190.

The cup washer may include a first circuit board part 220 and a board part supporter 230. The first circuit board part 220 may be disposed at one side of the water tank 120, and be provided with a controller that controls the operation of the cup washer. The first circuit board part 220 may be disposed at one side of the water tank 120 in the lower side of the cup washer, where there is a free space, since the water tank has a relatively smaller volume compared to the washing part 130.

The board part supporter 230 may be coupled to the base plate 110 at its lower side, coupled to the intermediate plate 140 at its upper side, and coupled with the first circuit board part 220. The board part supporter 230 may be stably coupled to the base plate 110 by a coupling mechanism.

The circuit board supporter 230 may be used not only to secure the first circuit board part 220, but also to secure tubings disposed at the lower side of the cup washer.

The cup washer may include an outer packaging part 250 which is coupled to the rear panel 180 and covers the rear supporter 162. To the rear supporter 162 a number of fastening mechanisms may be coupled for the coupling with other components of the cup washer.

Therefore, in the case of a structure in which the rear supporter 162 to which the fastening mechanism is fastened is exposed to the outside as it is, the visual aesthetic feeling of the cup washer may be deteriorated. Therefore, there is a need for a structure which covers the rear supporter 162 to which the fastening mechanism has been fastened.

The outer packaging part 250 may cover the rear supporter 162 and be coupled with a relatively smaller number of fastening mechanisms compared to the rear supporter 162. The outer packaging part 250 with such a structure can make the cup washer look neat overall by being disposed at a position corresponding to the rear supporter 162 outside the cup washer.

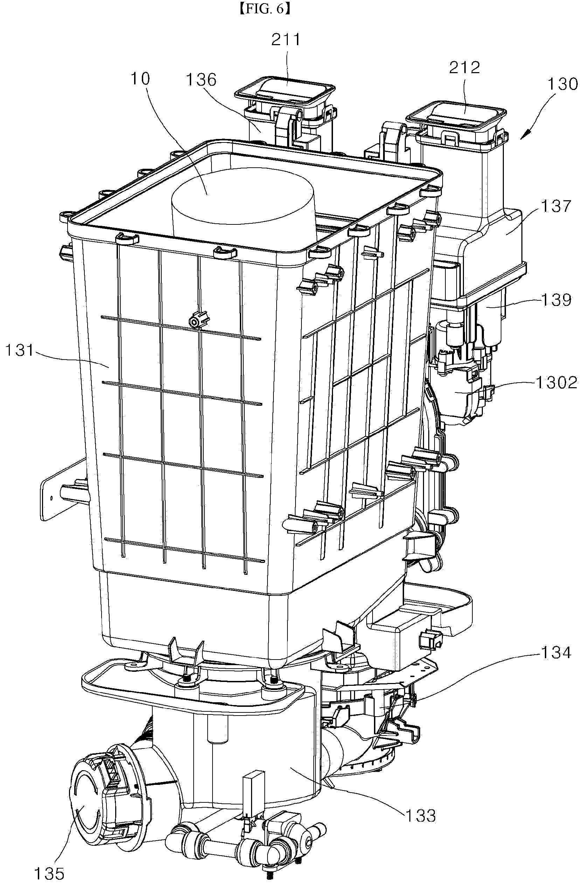

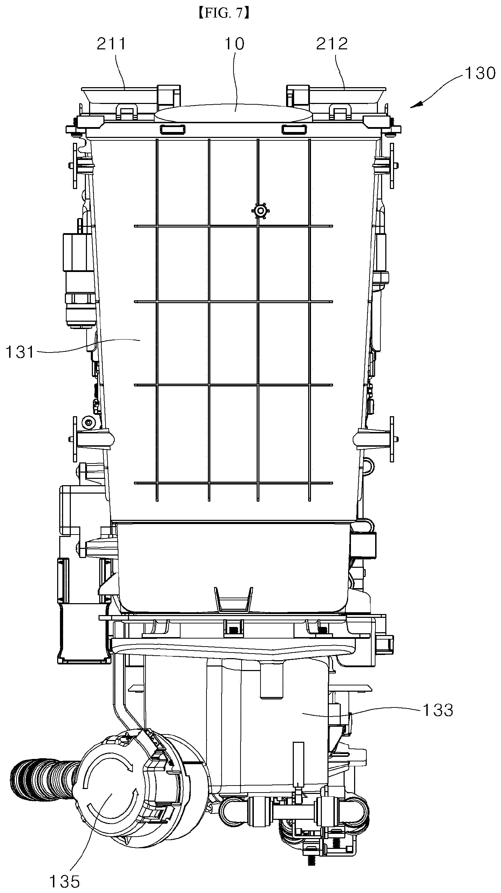

Hereinafter, the specific structure of the washing part 130 will be described in detail with reference to drawings. FIG. 6 is a perspective view showing the washing part 130 according to an embodiment. FIG. 7 is a front view showing the washing part 130 according to an embodiment.

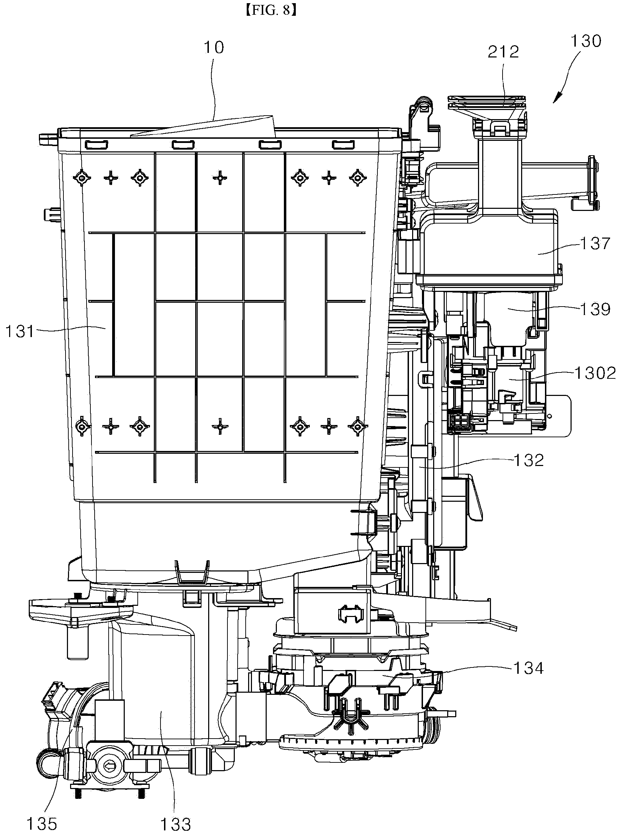

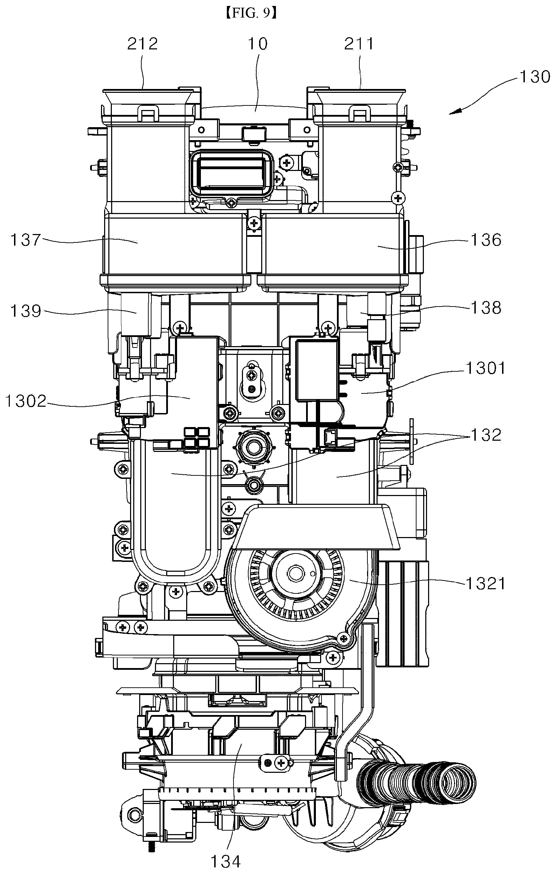

FIG. 8 is a side view showing the washing part 130 according to an embodiment. FIG. 9 is a rear view showing the washing part 130 according to an embodiment. The washing part 130 may include a tub 131, a drying module 132, a sump 133, a circulation pump 134, and a drain pump 135.

The tub 131 may provide a space where a cup is accommodated, and allow a washing water to be sprayed. In the tub 131 a rack on which a cup is rested may be provided, and a spray means for spraying water may be provided at the bottom. The open top of the tub 131 may be opened and closed by the door 150.

The drying module 132 may be disposed at one side of the tub 131 so as to be connected to the tub 131, and may spray heated air for drying into the inside of the tub 131. After the washing of the cup 10 with water has been completed, moisture remains on the surface of the cup. The drying module 132 may dry the cup by spraying the heated air, that is, hot air, onto the cup to dry the water remaining on the cup.

The drying module 132 may be provided with a heating device for heating the air introduced into the drying module 132. Additionally, the drying module 132 may be provided with a blower fan 1321 that forces the air to flow through a path formed in the drying module 132.

The sump 133 may be disposed at the lower side of the tub 131 so as to be connected with the tub 131, and may store water to be sprayed in the tub 131. The water stored in the sump 133 may be circulated through the tub 131 and the sump 133 by the circulation pump 134, and be sprayed in the tub 131 by the spray device to wash the cup 10 accommodated in the tub 131.

The circulation pump 134 may be disposed at the lower side of the tub 131 so as to be connected with the tub 131 and the sump 133, and may circulate water between the tub 131 and the sump 133. The circulation pump 134 may force water to flow from the sump 133 to the tub 131.

The circulation pump 134 may be connected with the spray device disposed at the lower side of the tub 131. Therefore, when the circulation pump 134 operates, the water stored in the sump 133 may be introduced into the spray device, and be sprayed to the inside of the tub 131 by the spray device to wash the cup.

The drain pump 135 may be disposed at the lower side of the tub 131 so as to be connected with the sump 133, and discharge water from the sump 133 to the outside. When the washing of the cup with water has been completed, the drain pump 135 may operate so that the water stored in the sump 133 can be discharged to the outside of the cup washer through a drain tubing connected with the drain pump 135.

The washing process of the cup 10 with the use of water stored in the water tank 120 is as follows. Water may be introduced into the water tank 120 from the city water through a tubing, and be stored therein. The water in the water tank 120 may be heated by the heating device provided in the water tank 120. The heated hot water in the water tank 120 may be introduced into the tub 131 through a tubing, and be stored in the sump 133 disposed at the lower side of the tub 131.

When the circulation pump 134 operates to wash the cup, the hot water may pass from the sump 133 through the spray device, and be sprayed to the inside of the tub 131 to wash the cup. The hot water sprayed in the tub 131 may be introduced back into the sump 133, be introduced back into the spray device by the circulation pump 134, and be sprayed into the inside of the tub 131 by the spray device.

While the circulation pump 134 is operating, the hot water for washing may flow sequentially through the sump 133, the spray device, and the tub 131, and this flow may be repeated. When the cup washing with hot water has been completed, the circulation pump 134 may stop, and the drain pump 135 may operate to discharge the water stored in the sump 133 to the outside.

When the drainage by the drain pump 135 has been completed, the drying module 132 may operate to spray hot air to the inside of the tub 131, and after the hot air has been sprayed for a set period of time, a cup washing operation including the drying process may be completed.

The cup washer may proceed with a washing with a detergent and a rinsing with a rinse agent at the same time. Hereinafter, a structure provided for inputting a detergent and a rinse agent into the tub will be specifically described.

Meanwhile, in the cup washing process with hot water, the washing process using a detergent and the rinsing process using a rinse agent may be separated from each other. After completing the process of washing the cup with hot water mixed with a detergent, the water in the sump 133 contains the detergent and foreign substances. Therefore, this contaminated water may be discharged to the outside by activating the drainage pump 135.

After the contaminated water has been discharged to the outside, a rinsing operation may proceed by introducing hot water to the sump 133 again, mixing a rinse agent into the hot water, and activating the circulation pump 134. In this way, the washing process using a detergent and the rinsing process using a rinse agent can be separated, thereby increasing the washing efficiency of the cup washer.

The washing part 130 may include a detergent storage part 136, a rinse storage part 137, a detergent injection part 138, a rinse injection part 139, a detergent pump 1301, and a rinse pump 1302.

The detergent storage part 136 may be disposed at the rear of the tub 131, and store a detergent. The rinse storage part 137 may be disposed separately from the detergent storage part 136 at the rear of the tub 131, and store a rinse. Therefore, detergent and rinse may not mix with each other.

The top cover 210 may be provided with a detergent feeding entrance 211 to which a detergent is input and a rinse feeding entrance 212 to which a rinse agent is input. The detergent feeding entrance 211 may be connected with the detergent storage part 136, and the rinse feeding entrance 212 may be connected with the rinse storage part 137. Accordingly, the detergent and rinse introduced to the detergent feeding entrance 211 and rinse feeding entrance 212 can be stored in the detergent storage part 136 and rinse storage part 137.

The detergent injection part 138 may be connected with the detergent storage part 136 and the tub 131, and may inject the detergent to the tub 131. The inlet of the detergent injection part 138 may be connected with the detergent storage part 136, and the outlet thereof may be connected to the tub 131.

The rinse injection part 139 may be connected with the rinse storage part 137 and the tub 131, and may inject the rinse to the tub 131. The inlet of the rinse injection part 139 may be connected with the rinse storage part 137, and the outlet thereof may be connected with the tub 131.

The detergent pump 1301 may be connected with the detergent injection part 138, and pump the detergent to the tub 131. The rinse pump 1302 may be connected with the rinse injection part 139, and pump the rinse to the tub 131. The operation of the detergent pump 1301 and the rinse pump 1302 may be controlled by the controller.

The controller may activate the detergent pump 1301 to mix detergent and water during the washing process, and may activate the rinse pump 1302 to mix rinse and water during the rinsing process.

The water tank 120 may be provided to be connected with the tube 131 via a tubing so that the water in the water tank 120 can be introduced to the tub 131. Accordingly, the water in the water tank 120 can be heated to become hot water, then be introduced to the tub 131, and be stored in the sump 133 until the circulation pump 134 is activated.

Meanwhile, as described above, the tub 131 may be provided with a water supply path directly connected with the city water. Therefore, depending on the user's choice, a cup can progress to a normal washing or a quick washing.

In the normal washing, the cup may be washed using the hot water heated in the water tank 120, and using detergent and rinse, thereby being capable of achieving the clean cup washing, but it may take a relatively long period of time.

In the quick washing, the cup may be washed using room temperature raw water supplied from the city water without using any detergent or rinse, thus making the washing time shorter, and, therefore, it may be conveniently used by a user who wants to quickly wash a cup that is relatively less contaminated.

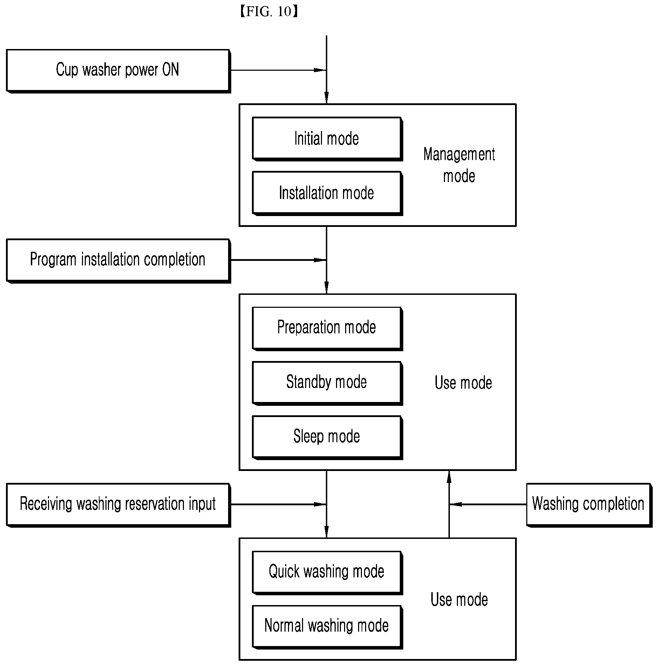

FIG. 10 is a flowchart for explaining a cup washer control method according to an embodiment. The control of the cup washer may be performed by entering a command to the controller provided in the cup washer.

The entering of a command to the controller may be proceeded with via an application programmed and implemented on a mobile device such as a smart phone carried by a user who wants to wash the cup, or via an input part provided in the cup washer. The entering of a command may be proceeded with by a user or by a manager who maintains and repairs the cup washer.

The mobile device may be connected communicatively with a main server located remotely, and the controller of the cup washer may also be connected communicatively with the main server. Therefore, commands entered into the mobile device can be transmitted to the controller of the cup washer via the main server.

The cup washer control method according to an embodiment may mean that the controller to be described later maintains or changes each of the operation modes of the cup washer.

The cup washer according to an embodiment may operate in a management mode and a use mode. During the management mode, the controller may check whether the cup washer operates normally. When the cup washer is supplied with power to operate, the cup washer may enter the management mode.

The management mode may include an initial mode and an installation mode. During the initial mode, after the cup washer is turned on, the water which has been introduced into the washing part 130 provided in the cup washer may be drained to the outside, and the main server and the cup washer may be connected communicatively with each other.

When the cup washer is turned on and enters the management mode, the controller may first drain the water which has been introduced into the washing part 130 to the outside. The draining is performed to clean the washing part 130 because the washing part 130 may contain residual water which has not drained previously, or the dirt may remain in the washing part 130 even after the washing part 130 has drained previously.

The draining may be to simply discharge water stored in the tub 131 and the sump 133 to the outside of the cup washer. Alternatively, for a cleaner condition, water may be introduced from the outside into the tub 131 and the sump 133, and then drained again. For example, after water is introduced from the city water to the tub 131, the water stored in the tub 131 and the sump 133 can be drained to the outside to clean the inside of the washing part 130.

After the controller has connected the main server and the cup washer communicatively with each other in the initial mode, the cup washer may enter the installation mode.

During the installation mode, the computer program may be installed or updated, which controls the operation of the cup washer. The program required to control the cup washer may be newly installed periodically, or updated rather than being newly updated. The Installing or updating of the program may be performed by receiving data transmitted from the main server connected to the cup washer.

If such a installing or updating of the programs is performed in the use mode to be described later, the operation of the cup washer may stop or proceed slowly, which may cause the user's inconvenience.

Therefore, by installing or updating the program during the management mode when the user does not actually use the cup washer, the user's inconvenience can be reduced.

Additionally, during the management mode, the controller may check whether the communication state with the main server is good, and whether the electrical components provided in the cup washer are operating normally without errors. If it is sensed as a result of the checking that there is an error in the communication state or the components, information about the error may be displayed on the display part 190.

After the installing or updating of the program has been completed, the cup washer may enter the use mode. During the use mode, a user carrying a cup may perform the washing with the cup washer.

The use modes may include a preparation mode, a standby mode, and a washing mode. The preparation mode and the standby mode may be distinguished depending on the temperature of the water stored in the water tank 120. The preparation mode may correspond to the case where the water stored in the water tank 120 of the cup washer has a temperature lower than a set temperature.

The standby mode may correspond to the case where the water stored in the water tank 120 has a temperature equal to or higher than the set temperature. In this regard, the aforementioned set temperature may be, for example, about 70°C. During a normal washing mode, when the water stored in the water tank 120 reaches the standby mode corresponding to the aforementioned set temperature or higher, the hot water in the water tank 120 may be introduced into the washing part 130, so that the washing may be performed.

Therefore, during the use mode, if the cup washer is in the preparation mode, it cannot be changed to the washing mode, and, however, after being changed to the standby mode, it can be changed to the washing mode, allowing the user to proceed with the washing.

When the cup washer is in the standby mode and receives a washing reservation input from the user, the cup washer may be changed to the washing mode, allowing the washing to be performed. By receiving a command during the standby mode, the cup washer may be changed to the washing mode, during which the cup accommodated in the cup washer can be washed. After the washing has been completed, the cup washer may be changed back to the preparation mode.

In an embodiment, there may be provided an algorithm that integrates the management mode during which the cup washer is maintained or repaired and the use mode during which the user uses the cup washer for the washing. Therefore, it is possible to provide convenient use for users while ensuring smooth management of the cup washer.

The use mode may include a sleep mode during which the operation of the heater accommodated in the water tank 120 is stopped. The sleep mode may be changed to either the preparation mode or the standby mode by receiving a command, and at this time, the heater in the water tank 120 may operate again to heat the water stored in the water tank 120.

However, if the use frequency of the cup washer is so low that the washing is not performed for a long period of time, it is appropriate to stop the heater and wait. Thus, the cup washer may stop the operation of the heater and enter the sleep mode by receiving a command.

During the sleep mode, the operation of the heater may be stopped, which can reduce the amount of electricity consumption by the cup washer. During the sleep mode, the controller may change it to either the preparation mode or the standby mode by receiving a command.

Although the heater is stopped because the sleep mode stops the operation of the heater, the temperature of the water stored in the water tank 120 can be kept equal to or higher than the set temperature described above for a certain period of time, and as the time passes further, the temperature of the water may drop below the set temperature.

Accordingly, when receiving a command during the sleep mode at a state where the water in the water tank 120 is at the set temperature or higher, the standby mode can be entered, while, when receiving a command at a state where the water in the water tank 120 is below the set temperature, the preparation mode can be entered.

The cup washer can be changed from the sleep mode to one of the preparation mode and the standby mode depending on a command entered from a mobile device carried by a user or an input part provided in the cup washer.

For example, a user may enter a reservation for washing a cup through an application on a mobile device, and the cup washer may be changed from the sleep mode to one of the preparation mode and the standby mode by turning on the heater again immediately upon receiving the reservation.

As another example, a user may enter a wake-up command, that is, a command to turn on the heater again and prepare for washing, into the input part provided in the cup washer, and accordingly, the cup washer may be changed from the sleep mode to one of the preparation mode and the standby mode.

A command to change the cup washer to the sleep mode may be implemented by a user or manager entering that command, or by a command signal corresponding to the expiration of a set period of time.

Accordingly, the cup washer can be changed from the preparation mode or the standby mode to the sleep mode when receiving a command from the input part while in the preparation mode or the standby mode, or when a set period of time has elapsed from the beginning of the preparation mode or the standby mode.

The washing mode may include a normal washing mode and a quick washing mode, and the user may select the normal washing mode or the quick washing mode. The normal washing and the quick washing are as already described above.

During the washing mode, the cup washer can perform the quick washing mode during which the cup is washed using the room temperature water supplied from the city water according to a command entered by the user, or the normal washing mode during which the cup is washed using the hot water supplied from the water tank 120.

The cup washer may be changed from either the sleep mode or the standby mode to the washing mode by receiving a command from the user's mobile device. The washing may be performed in either the quick washing or the normal washing depending on the user's choice.

The user may enter a command to the application on the mobile device to select either the quick washing or the normal washing, and according to this, the cup washer may be changed from the sleep mode or the standby mode to the quick washing mode or the normal washing mode.

As described above, the cup washer cannot perform the washing directly from the preparation mode. Therefore, when a washing progress command is entered, the cup washer can be changed to the washing mode to perform the washing after reaching the standby mode.

However, when the washing progress command is entered during the sleep mode, if the water in the water tank 120 is at the set temperature or higher, the sleep mode can be changed directly to the standby mode, and thus the sleep mode can be changed directly to the washing mode without going through with the preparation mode.

In the case where the cup washer receives the quick washing mode progress, it can perform the washing immediately. Since during the rapid washing mode, the washing is performed using the raw water at room temperature introduced from the city water without using the water stored in the water tank 120, there is no need to heat the stored water, and thus the washing can be performed immediately without needing to consider the standby mode or the preparation mode.

When the cup washer receives input for the normal washing mode progress, if it is currently in the standby mode, it can immediately perform the washing of the cup, while, if it is currently in the preparation mode, it proceeds with the washing of the cup after the water stored in the water tank 120 reaches the set temperature.

During the normal washing mode, the washing can be performed only when the hot water in the water tank 120 has a temperature equal to or higher than the set temperature. Therefore, if it is currently in the standby mode because the hot water has a temperature equal to or higher than the set temperature, the washing of the cup can be performed immediately.

If it is currently in the preparation mode, it waits for the water stored in the water tank 120 to be sufficiently heated by the heater and thus reach the set temperature or higher temperature, so that the preparation mode is changed to the standby mode, after which the washing of the cup can be performed.

In an embodiment, the cup washer can perform the normal washing or the quick washing according to the user's selection. By the simple entering on the mobile device by the user, the controller can divide the normal washing mode and the quick washing mode to perform the washing of the cup, thereby providing convenience to the user.

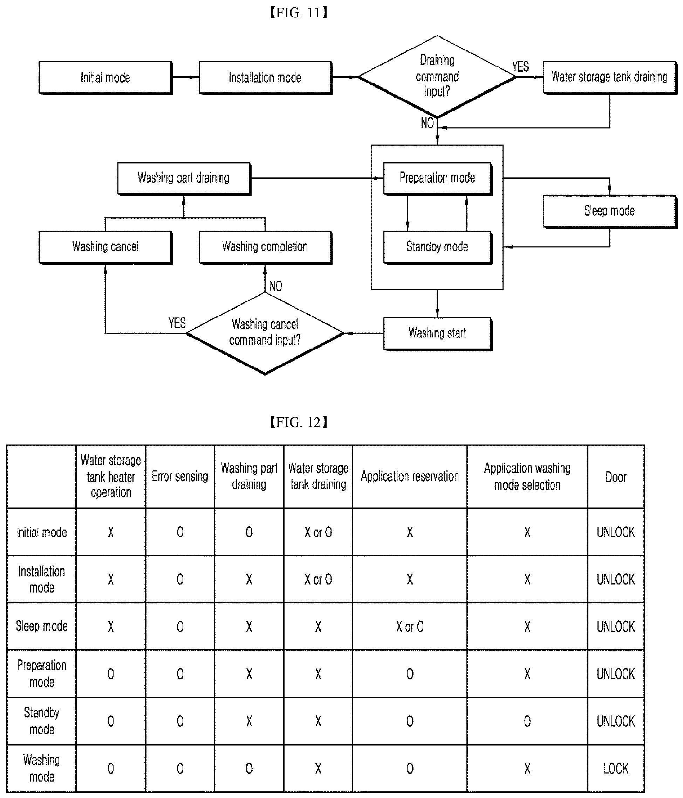

FIG. 11 is a flowchart specifically showing a cup washer control method according to an embodiment. During the management mode, the cup washer may perform an operation of draining the water stored in the water tank 120 to the outside.

The draining of the water tank 120 may be proceeded with by the manager during the management mode. The draining of the water tank 120 may be proceeded with arbitrarily by the manager's selection. For example, in the case where the cup washer has been left turned off for a long period of time with water stored in the water tank 120 and then is turned back on, sanitary problems may occur, and so it needs to proceed with the draining of the water tank 120.

if during the management mode, no water is stored in the water tank 120 or the water has not been stored for a long period of time, no significant sanitary problem may occur, and so the water tank 120 may not be drained during the management mode.

Therefore, during the management mode, the draining of the water tank 120 may be selected and proceeded with by the manager. When the draining of the water tank 120 is required, the manager may enter a drain command for the water tank 120 via the input part provided in the cup washer, and accordingly, the controller can proceed with the draining of the water tank 120. The draining of the water tank 120 may be proceeded with at any time while the cup washer is in the management mode.

The cup washer may drain the water stored in the water tank 120 to the outside according to a command entered from the input part provided in the cup washer. The drain command for the water tank 120 may or may not be entered.

In the case where there is the command input regarding the draining, the cup washer may be changed to the use mode after the draining operation and the proceeding of the installation mode have been completed. In the case where there is no command input regarding the draining, the cup washer may be changed to the use mode after the proceeding of the installation mode has been completed.

Once the washing starts, the washer may proceed with the normal washing or the quick washing, according to the user's choice. Meanwhile, considering the user's convenience, the user may cancel the washing at any time after the washing is proceeded with by the controller through the set process and before the washing is completed by the controller.

The cancelling of the washing may be performed by entering a command to stop the proceeding of the washing mode via the user's mobile device or the input part provided on the cup washer.

The washing mode may include a drying mode. In the case where the washing is completed through a normal process, a drying process may be automatically proceeded with by the drying module 132 to dry the water remaining on the surface of the cup after the washing using water has been completed. Meanwhile, if the washing is stopped by the user, the drying process may not be proceeded with.

After the washing mode has been completed or the command to stop the washing mode has been received, the cup washer may drain the water that has been introduced into the washing part 130 to the outside. After one time washing has been proceeded with, the water mixed with detergent, rinse or dirt may remain in the tub 131 and sump 133 of the washing part 130.

Therefore, when the previous washing has been completed, the water that has been introduced into the wash part 130 may be drained to the outside to prepare for the next washing.

After the draining has been completed, the cup washer may be changed to the preparation mode. After the draining has been completed, because the water tank 120 is empty due to already completing the proceeding of one time washing, during the preparation mode, water may be supplied from the city water to the water tank 120 and the water stored in the water tank 120 may be heated.

After the water is heated, the cup washer may be in the preparation mode, the standby mode, or the sleep mode depending on conditions, and, in this state, it may prepare for the next cup washing.

During the washing mode state, the user may open the door 150 of the cup washer, put the cup in the washing part 130, and then press the start button provided in the input part of the cup washer to proceed with the washing. In another embodiment, the controller may proceed with the washing without a manual command input from the user by sensing that a cup has been accommodated in the washing part 130, and recognizing that the door 150 is closed. At this time, the normal washing or the quick washing may be performed according to the command entered by the user via the mobile device in advance.

The door 150 for opening and closing the washing part 130 provided in the cup washer may be provided to be locked with the washing part 130 being closed during the washing mode. While the washing is being proceeded with, the controller can lock the door 150 to prevent the door 150 from being opened during the washing, causing the water to be splashed to the outside of the washing part 130.

The door 150 may be provided to be unlocked when a set period of time has elapsed after the washing mode has been completed, or upon receiving a command to stop the proceeding of the washing mode. Once the door 150 is unlocked, the user may open the door 150 to retrieve the cup.

The cup washer may receive reservations for the washing of a cup from a plurality of users. The plurality of users may enter cup-washing reservations via their mobile devices, and the main server connected to the plurality of mobile devices may receive the plurality of reservations transmitted from the mobile devices. The main server may transmit the plurality of reservations to the cup washer connected to itself.

The cup washer may receive a reservation for the washing of a cup from a user during the use mode, and list the plurality of reservations entered by the plurality of users in the order in which the plurality of reservations were entered.

The cup washer may transmit a notification signal to each user who has made the washing reservation when the washing turn for each of the plurality of reservations arrives. The notification signal may be transmitted to each user's mobile device via the main server.

When the user receives the notification signal indicative of that the user's turn arrives, the user can go to the cup washer to wash his or her own cup.

In the case where the cup washer receives a reservation from a user during the sleep mode, the cup washer may be changed from the sleep mode to one of the preparation mode and the standby mode depending on the temperature of the water stored in the water tank.

If there is no user reservation, the cup washer may be changed to the sleep mode to save electricity. When a user's reservation is entered during the sleep mode, the cup washer may wake up immediately, and be changed to the preparation mode or the standby mode.

As described above, in the case where, during the sleep mode, the hot water in the water tank 120 has a temperature equal to or higher than the set temperature, the sleep mode may be changed to the washing mode immediately when a reservation is entered, so that the washing can be prepared.

The cup washer may be equipped in a store providing a beverage service. Such a store does not allow a user to enter after business hours, and so there is a need to prevent a user from making a cup-washing reservation outside of business hours.

If there is a cup-washing reservation during non-business hours, in spite of not being capable of performing the washing of a cup actually, the cup washer is changed from the sleep mode to the preparation mode or the standby mode due to the reservation, thereby heating the water in the water tank 120, which causes electricity to be wasted incurring a risk of a fire breaking out in the store where no one is present.

Accordingly, the cup washer may be provided to maintain the sleep mode without receiving a reservation for the washing of a cup from a user during a set time period. Such a time period may be non-business hours of a store, and be set by a manager.

Due to such a configuration, during non-business hours or other periods during which the cup washer is not used, the cup washer can always maintain the sleep mode without operating the heater. Accordingly, power waste can be reduced and fires can be prevented even without turning off the cup washer, thereby providing convenience to the manager.

FIG. 12 is a table for explaining a cup washer control method according to an embodiment. FIG. 12 specifically illustrates the operation of the cup washer in each of the above-described modes.

The heater of the water tank 120 may operate during the preparation mode, the standby mode, and the washing mode. The heater may operate even during the washing mode, and hot water from the water tank 120 can be supplied to the washing part 130 during the washing.

To sense an error is that the controller senses an error related to whether there is an abnormality in the operation of the cup washer's electrical components or whether the cup washer is communicating smoothly with the main server. If an error is sensed and there is a problem with the cup washer, the controller may display information about this on the display part 190. The sensing of an error may continue during all modes of the cup washer.

The draining of the washing part 130 may be proceeded with during the initial mode of the management mode for the purpose of hygiene of the washing part 130. Additionally, the draining of the washing part 130 may be proceeded with at the end time of the washing mode to proceed with the next washing.

The draining of the water tank 120 may be proceeded with even at any stage of the initial mode or installation mode in the management mode, and, however, it may or may not be proceeded with depending on the manager's choice.

The washing reservation via an application on a mobile device by a user may be proceeded with during the preparation mode, the standby mode, and the washing mode in the use mode. During the sleep mode, the washing reservation may be proceeded with at any time except during the set time period where reservations are prohibited.

The user may select which, among the normal washing and the quick washing, would be the washing mode, via the application on the mobile device. In this regard, since the user may change his mind, the selection of the application's washing mode may be proceeded with in the standby mode just before the washing begins.

The door 150 may be locked while the washing mode is proceeded with, and be unlocked during other modes. Since the door 150 is locked while the washing is proceeded with, it is possible to prevent water from being splashed to the outside of the cup washer through the opened door 150 or the gap around the door 150 during the washing.

In an embodiment, a user may remotely control the cup washer by a mobile device carried by the user, thereby reducing the number of times the user has to wait in line in front of the cup washer for the user's turn or to enter control commands directly into the cup washer, which thus provides convenience to the user of the cup washer.

Although the present invention has been described with reference to the drawings provided as examples, the present invention is not limited by the drawings and embodiments disclosed in this disclosure, and it is obvious that various modifications can be made by those skilled in the art without departing from the scope of the technical idea of the present invention. In addition, even if operational effects according to the configuration of the present invention were not explicitly described while explaining the embodiments of the present invention, it is natural that the effects that can be predicted by that configuration should also be acknowledged.

## Claims

1. A cup washer control method operating in:
a management mode during which it is checked whether a cup washer operates normally;
and
a use mode during which a cup is washed,
wherein the use mode includes:
a preparation mode corresponding to a case where a water stored in a water tank of the cup washer has a temperature lower than a set temperature;
a standby mode corresponding to a case where the water stored in the water tank has a temperature equal to or higher than a set temperature; and
a washing mode during which a cup accommodated in the cup washer is washed.

2. The cup washer control method of claim 1, wherein the use mode includes a sleep mode during which an operation of a heater accommodated in the water tank is stopped, and
Wherein the sleep mode is changed to either the preparation mode or the standby mode by receiving a command.

3. The cup washer control method of claim 2, wherein the cup washer is changed from the sleep mode to one of the preparation mode and the standby mode depending on a command entered from a mobile device carried by a user or an input part provided in the cup washer.

4. The cup washer control method of claim 3, wherein the cup washer is changed from the preparation mode or the standby mode to the sleep mode when receiving a command from the input part while in the preparation mode or the standby mode, or when a set period of time has elapsed from the beginning of the preparation mode or the standby mode.

5. The cup washer control method of claim 3, wherein the cup washer is changed from either the sleep mode or the standby mode to the washing mode by receiving a command from the mobile device.

6. The cup washer control method of claim 5, wherein the cup washer proceeds with a quick washing mode during which a cup is washed using a room temperature water according to an entered command, or a normal washing mode during which a cup is washed using a hot water supplied from the water tank.

7. The cup washer control method of claim 6, wherein the cup washer proceeds with a washing immediately when the cup washer receives a quick washing mode progress.

8. The cup washer control method of claim 7, wherein, when the cup washer receives a normal washing mode progress,
if the cup washer is currently in the standby mode, the cup washer immediately proceeds with a washing of a cup, and
if the cup washer is currently in the preparation mode, the cup washer proceeds with a washing of a cup after the water stored in the water tank reaches the set temperature.

9. The cup washer control method of claim 2, wherein the cup washer receives a reservation for a washing of a cup from a user during the use mode, and lists a plurality of reservations entered by a plurality of users in an order in which the plurality of reservations were entered, and
transmits a notification signal to each user who has made a reservation for a washing when a washing turn for each of a plurality of reservations arrives.

10. The cup washer control method of claim 9, wherein in a case where the cup washer receives a reservation from a user during the sleep mode, the cup washer is changed from the sleep mode to one of the preparation mode and the standby mode depending on a temperature of a water stored in the water tank.

11. The cup washer control method of claim 9, wherein the cup washer is provided to maintain the sleep mode without receiving a reservation for a washing of a cup from a user during a set time period.

12. The cup washer control method of claim 1, wherein a door for opening and closing a washing part provided in the cup washer is provided to be locked with the washing part being closed during the washing mode.

13. The cup washer control method of claim 1, wherein the management mode Includes:
an initial mode during which, after the cup washer is turned on, a water which has been introduced into a washing part provided in the cup washer is drained to an outside, and a main server and the cup washer are connected communicatively with each other; and
an installation mode during which a computer program is installed or updated, which controls an operation of the cup washer.

14. The cup washer control method of claim 13, wherein, during the management mode, the cup washer proceeds with an operation of draining a water stored in the water tank to an outside.

15. The cup washer control method of claim 14, wherein, in a case where there is a command input regarding a draining, the cup washer is changed to the use mode after a draining operation and a proceeding of the installation mode have been completed, and
in a case where there is no command input regarding a draining, the cup washer is changed to the use mode after a proceeding of the installation mode has been completed.

16. The cup washer control method of claim 12, wherein the door is provided to be unlocked when a set period of time has elapsed after the washing mode has been completed, or
upon receiving a command to stop a proceeding of the washing mode.

17. The cup washer control method of claim 1, wherein, after the washing mode has been completed or a command to stop the washing mode has been received, the cup washer drains a water that has been introduced into a washing part to an outside, and
wherein after a draining has been completed, the cup washer is changed to the preparation mode.
